# EUROPÄISCHE PATENTANMELDUNG

(11) **EP 0 623 417 A2**
(43) Veröffentlichungstag der Anmeldung: **09.11.1994**
(21) Anmeldenummer: 94108595.3
(22) Anmeldetag: 15.09.1990
(51) Int. Cl.: B23P 9/02, B26F 1/44, B23P 15/40, B24B 19/20

(54) **Stanzblech, Verfahren zu seiner Herstellung und Werkzeug zur Durchführung des Verfahrens**

(30) Priorität: 22.09.1989 CH 3463/89
(62) Teilanmeldung aus: 90117810.3
(71) Anmelder: ELECTRO OPTIC AG, FL-9490 Vaduz (LI)
(72) Erfinder: Helferich, Fritz, FL-9495 Triesen (LI)
(74) Vertreter: Büchel, Kurt F., Dr.

(57) **Zusammenfassung**

Ein Stanzblech (1) aus Stahlblech besitzt mindestens einen von der Vorderseite (5) abragenden, jeweils eine Stanzkante (7) tragenden Steg (6) , wobei der Normal-Abstand der Stanzkante (7) von der Rückseite (4) des Stanzblechs (1) um ein Sollmass (h) mit einer Toleranz von höchstens 0.04 mm variiert. An beiden Flanken (30) der Stanzkante (7) ist unmittelbar an dieser je eine durch Drücken erzielte Vertiefung (31) oder Aufwölbung (32) angeordnet. Gegebenenfalls kann dass auf der Rückseite (4) des Stanzbleches (1) in mindestens einem Bereich der Stege (6) Material abgetragen oder aufgefüllt sein.

## Beschreibung

Ein Stanzblech nach dem Oberbegriff des Anspruches 1 kann verschiedenen Zwecken dienen, wird aber insbesondere zum Stanzen von Etiketten aus Papier oder anderem Folienmaterial verwendet. Damit die Etiketten einwandfrei ausgestanzt werden können, müssen die Stanzkanten besonders geschärft sein. Dieses Schärfen der Kanten, das nach der Erzeugung der gewünschten Konturen mittels Reliefätzen oder anderen gebräuchlichen, spanabhebenden Herstellungsarten geschieht, erfolgt im allgemeinen manuell durch Abziehen mit Schleif- und Schabewerkzeugen oder auch maschinell. Das Problem bei derartig hergestellten Stanzblechen besteht darin, das zum einwandfreien Ausstanzen nötige, gleiche Sollmass des Stanzbleches (NormalAbstand der Stanzkante von der Rückseite des Stanzbleches) für alle Stanzkanten zu erreichen. Allein beim maschinellen Schärfen der Stanzkanten wird infolge der vorhandenen Blechtoleranzen diese Forderung nicht erfüllt; dem manuellen Nachschärfen sind aus Gründen der Arbeitsintensität natürliche Grenzen gesetzt.

Aufgabe der Erfindung ist es, ein Stanzblech zu schaffen, das für alle Stanzkanten das gleiche Sollmass aufweist. Diese Aufgabe wird durch die im Kennzeichen des Anspruches 1 beschriebenen Merkmale gelöst. Mögliche und verbesserte Ausführungsformen des erfindungsgemässen Stanzbleches sind in den Kennzeichen der Ansprüche 2, 3, 4 und 5 beschrieben. Besonders zweckmässig ist die Herstellung des Stanzbleches nach den Kennzeichen der Ansprüche 6 bis 10, beziehungsweise mit Hilfe eines Werkzeuges nach den Kennzeichen der Ansprüche 11 bis 18.

Bei dem dem Stand der Technik entsprechenden, ersten Schritt der Herstellung von Stanzblechen wird das Ausgangsblech mit Ätzresistmasken belegt und danach zur Erzeugung der die Stanzkanten tragenden Stege einem Reliefätzverfahren unterworfen. Das Blech wird dabei auf eine Tiefe von ca. 0.3 mm ausgenommen. Die so entstandenen Stege haben einen ungefähr trapezförmigen Querschnitt. Bei einer eventuell nachfolgenden Feinätzung wird überhängendes Material abgetragen, die Stanzkantenschärfe aber nicht wesentlich verbessert. Die Stanzkanten müssen deswegen scharf nachbearbeitet werden. Das ist auf unterschiedliche Weise möglich; so werden z.B. nach der DE-PS-3618768 auf dem Ausgangsblech zwei Ätzresistmasken unterschiedlichen Materials erst durch Tiefenätzung und dann durch Feinätzung entfernt, so dass scharfe Stanzkanten entstehen. Aber hier, wie auch in den üblichen NC-gesteuerten maschinellen Verfahren, sind dem Erreichen der für das Sollmass geforderten Toleranz Grenzen gesetzt. Dieses Sollmass, d.h. der geforderte Normal-Abstand zwischen Stanzkante und Rückseite des Stanzblechs muss für alle Stanzkanten gleich sein, da beim Anpressen des Stanzblechs alle Stanzkanten die Etikettenschicht in gleicher Weise ganz durchdringen müssen, wobei die Trägerfolie nicht angeritzt werden darf. So ist z.B. für die gebräuchlichsten Dicken der Trägerfolien von 0.05 bis 0.15 mm und einer Dicke der Etikettenschicht von ca. 0.1 mm für das Sollmass eine Toleranz von 0.02, vorzugsweise 0.005mm erwünscht.

Für verschiedene Materialien, vor allem solche mit Kunststoffkaschierung, sind Stanzbleche wünschenswert, für die in jedem Fall eine Höhentoleranz von 0.005 mm gefordert wird. Zusätzlich ist gerade für diese Art von Stanzblechen die Güte der Schneidekante von wesentlicher Bedeutung. Die Kantenbreite ist, je nach der Ausbildung der Kante, unterschiedlich definiert. So wird für abgerundete Kanten darunter der kürzeste Abstand zwischen den beiden Flanken verstanden, an der Stelle, wo die Flankenneigung in die Kantenkrümmung übergeht. Für an der Schneide mehr oder weniger flache Kanten wird die Kantenbreite als der kürzeste Abstand definiert, der durch die Schnittpunkte der oberen Kantenfläche bzw. der an sie parallel zum Stanzblech gelegten Tangente mit den beiden Flanken bzw. deren Fluchtlinien festgelegt ist.

Die Kantenbreite, die die Schärfe der Kante bestimmt, muss für derartige Stanzbleche jedenfalls weniger als 0.005 mm betragen, ein Wert, der durch die aus dem Stand der Technik bekannten Verfahren, insbesondere infolge der gleichzeitigen Forderung nach einer Höhentoleranz von 0.005 mm, nicht verwirklicht werden konnte. Denn das nach dem Ätzen mit einem Übermass versehene Stanzblech wird zwar mit der erforderlichen Toleranz auf das Sollmass geschliffen, infolge der dabei aufgrund der Blech- und Ätztoleranzen resultierenden, unterschiedlichen Breite der Stirnfläche der Stanzkanten wird aber, sowohl bei händischem als auch bei NC-gesteuertem Schärfen, entweder - bei eingehaltener Höhentoleranz - eine der Forderung nach einer maximalen Breite von 0,005 mm entsprechende Kante, oder aber, bei entsprechend korrektem Scharfschliff der Stanzkanten, das Höhensollmass mit der erforderlichen Toleranz nicht erreichbar sein.

Bei dem erfindungsgemässen Stanzblech ist die Sollhöhe auf die geforderte Toleranz eingestellt.

Bis jetzt war eine Nachkorrektur des Stanzbleches an den Stanzkanten in der Praxis an der Druckmaschine nicht möglich. Mit Hilfe des erfindungsgemässen Werkzeuges ist jedoch sogar eine stellenweise Höhenkorrektur möglich, unter Beibehaltung der bereits vorhandenen, den erforderlichen Toleranzen entsprechenden, Stanzkantenschärfe. Das Werkzeug besteht aus zwei in einem Halter zusammengefassten Hartstoff-Stiften, die an ihren jeweiligen Enden gegengleiche, gekrümmte Seitenflächen aufweisen. Sind diese Flächen als Kugelkalotten ausgeformt, so ist ihre Fertigung in der gewünschten Genauigkeit problemlos. Die unteren Stirnflächen der beiden Hartstoff-Stifte sind zur Längserstreckung der Stifte senkrechte Flächen geringer Krümmung, die aus fertigungstechnischen Gründen vorzugsweise plan sind. Dadurch wird bei der korrigierenden Bearbeitung der Stanzkanten ein Aufliegen der Hartstoff-Stifte auf der Oberfläche der Zwischenräume vermieden. Eine den Übergang zwischen diesen Stirnflächen und den Seitenflächen darstellende Rundkante mit entsprechend kleinem Krümmungsradius verhindert das Entstehen einer Kerbe an der Stanzkantenflanke bei eventuell nachlässigem Aufsetzen des Werkzeugs.

Stellt man fest, beispielsweise bei einer Probestanzung oder bei Einstellung des Stanzwerkes der Druckmaschine, dass an unterschiedlichen Stellen des Stanzbleches Gegenkorrekturen notwendig sind, so wird das Werkzeug an diesen Stellen drückend, der Stanzkante entlang, geführt. Dabei wird die Schneide der Stanzkante infolge der Krümmung der Seitenflächen und der Neigung der Stanzkanten-Flanken vom Werkzeug höchstens umfasst und keinesfalls breitgedrückt. Wird das Werkzeug der Stanzkante entlang drückend bewegt, so wird Druck nur auf die Flanken der Stanzkante, knapp unterhalb der Kante, ausgeübt. Dabei kommt es, je nach Werkzeug, zu einem Aufdrücken und damit einer Erhöhung der Stanzkanten oder einem Andrücken und damit einer Erniedrigung der Stanzkanten. Die Werkzeuge zum Aufdrücken bzw. Andrücken - für die Bearbeitung von Stanzkanten mit gleichen Flankenneigungen - unterscheiden sich dabei nur in der Grösse der Winkel, den die jeweiligen End-Seitenflächen des Werkzeugs miteinander einschliessen.

Sind die beiden Hartstoff-Stifte um ihre gemeinsame Längsachse miteinander drehbar in einem Halter gelagert, so ist die Gegenkorrektur auch gekrümmter Stanzkanten ohne Schwierigkeit bequem durchführbar.

Die mit Hilfe des erfindungsgemässen Werkzeugs mögliche Gegenkorrektur des Sollmasses beträgt bis zu 0.04 mm. Als besonders vorteilhaft bei den mit Hilfe des erfindungsgemässen Werkzeugs erzielten Korrekturen erweist sich die Tatsache, dass sogar Korrekturen von Korrekturen,die manchmal notwendig sein könnten, möglich sind.

Die Hartstoff-Stifte, die beispielsweise einen quadratischen Querschnitt aufweisen, können über seitlich durch den Halter geführte Stiftschrauben, deren Enden kegelförmig ausgebildet sind, unter dem Mikroskop justiert werden. Dazu sind am oberen Ende der Hartstoff-Stifte schräge Flächen ausgebildet, die mit den kegelförmigen Enden der Stiftschrauben zum Eingriff kommen.

Bilden diese schrägen, oberen Endflächen der Hartstoff-Stifte die Seitenflächen einer abgestumpften Pyramide, so können die Hartstoff-Stifte, je nach Abnutzung, um ihre Längsachsen gedreht, neu justiert und über Klemmschrauben im Halter fixiert werden.

Die Nachbearbeitung der Stanzkanten mit dem nicht-spanabhebenden, drückenden Werkzeug ermöglicht nicht nur eine Korrektur der Stanzkantenhöhe, sondern bewirkt gleichzeitig eine verbesserte Oberflächenbeschaffenheit der Stanzkantenflanken im unmittelbar der Stanzkante benachbarten Bereich. Die nachbearbeiteten Stanzkantenflanken zeigen glattere Oberflächen und verlängern, infolge der durch das Drücken erfolgten Verdichtung an der Oberfläche, die Standzeit des Stanzblechs.

Ein Verfahren, mit dessen Hilfe ein Stanzblech hergestellt werden kann, das sich durch durch scharfe Stanzkanten auszeichnet die Breite liegt unter 0,005 mm bei gleichzeitig maximaler Maschinengenauigkeit des Sollmasses ist in der Stammanmeldung dieser Teilanmeldung beschrieben. Ein solches Sollmass, das rein maschinell auf die weiter unten beschriebene Weise erreicht wird, wird allerdings aufgrund von dem maschinellen Herstellungsverfahren inhärenten Maschinentoleranzen bestimmt, wodurch sich eventuell eine Nachbearbeitung der Stanzkanten an verschiedenen Stellen mittels des erfindungsgemässen Werkzeugs als notwendig erweist.

Weitere Einzelheiten ergeben sich anhand der nachfolgenden Beschreibung von in der Zeichnung schematisch dargestellten Ausführungsbeispielen. Es zeigen:
- Fig.1: einen Schnitt durch ein Stanzblech, eine Etikettenschicht und eine Trägerfolie;
- Fig.2: einen Schnitt durch ein Stanzblech mit positiver Toleranz;
- Fig.3: einen Schnitt durch das Stanzblech der Fig. 2, auf einer Haltefläche;
- Fig.4: einen Schnitt durch ein Stanzblech mit negativer Toleranz;
- Fig.5: einen Schnitt durch das Stanzblech der Fig. 4, auf einer Haltefläche;
- Fig.6: einen Schnitt durch ein Stanzblech auf einem Haltezylinder;
- Fig.7: einen Längsschnitt durch ein erfindungsgemässes Werkzeug;
- Fig.8: einen Querschnitt durch eine Stanzkante und einen Detailschnitt durch ein der Fig. 7 entsprechendes Werkzeug zum Andrücken;
- Fig.8a: das Detail I der Fig. 8;
- Fig.9: einen Querschnitt durch eine Stanzkante und einen Detailschnitt durch ein der Fig. 7 entsprechendes Werkzeug zum Aufdrücken und
- Fig.9a: das Detail II der Fig. 9.

Alle Figuren sind als schematisch anzusehen und nicht massstabgetreu; sie werden zusammenhängend beschrieben; gleiche Teile sind mit gleichen Bezugsziffern versehen, ähnliche Teile mit gleichen Bezugsziffern, aber mit verschiedenen Indizes.

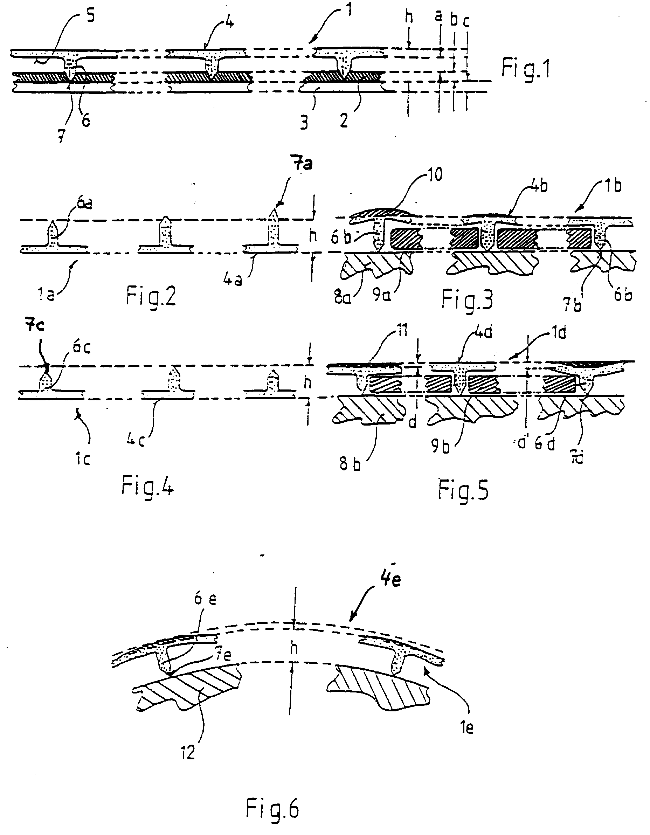

Aus Fig.1 sind die Bedingungen für das Stanzen von Etiketten zu entnehmen. Auf einer Trägerfolie 3 ist eine Etikettenschicht 2 aufgebracht. Das Stanzblech 4 schneidet mit den Stanzkanten 7 seiner Stege 6 die Etiketten aus der Etikettenschicht 2. Die Stanzkanten 7 müssen beim Anpressen des Stanzblechs 1, was mittels einer (nicht dargestellten) Platte oder Walze geschieht, die Etikettenschicht 2 ganz durchdringen, wobei die Trägerfolie 3 nicht angeritzt werden darf. Es ist ersichtlich, dass das Sollmass h, d.h. der Sollabstand zwischen Stanzkanten 7 und Rückseite 4 des Stanzblechs 1, für alle Stanzkanten 7 gleich sein muss. Für die gebräuchlichsten Dicken c der Trägerfolien 3 von 0.05 - 0.15 mm und einer Dicke b der Etikettenschicht von ca. 0.1 mm ist für das Sollmass h eine Toleranz von 0.02, vorzugsweise 0.005 mm erwünscht. Das heisst, dass das Sollmass innerhalb der erwünschten Toleranzbreite liegt. Der Hohlraum (a) zwischen der Vorderseite 5 des Stanzblechs 1 und der Oberfläche der Etikettenschicht 2 wird durch die Führung der (nicht dargestellten) Platten, bzw. Walzen, durch die das Stanzblech 1 auf die Etikettenschicht 2 gedrückt wird, bestimmt.

Fig.2 zeigt ein Stanzblech 1a, dessen Stanzkanten 7a mit positiver Toleranz bearbeitet wurden. Ein solches Stanzblech 1b wird, wie in Fig. 3 dargestellt, mit seinen Stanzkanten 7b auf einer Halteplatte 8a ausgerichtet. Dabei kann es sich für die weitere Bearbeitung als zweckmässig erweisen, zwischen die Halteplatte 8a und die freien Bereiche zwischen den Stegen 6b Distanzplättchen 9a einzubringen. Die Dimensionierung dieser Distanzplättchen 9a wird durch etwas verkleinerte Etikettenabmessungen in Länge und Breite bestimmt sein, während die Dicke höchstens der Summe aus dem Abstand a und der Dicke der Etikettenschicht b entsprechen kann, aber jedenfalls grösser als b sein sollte. Das Stanzblech 1b wird nun auf der Halteplatte 8a fixiert, z.B. magnetisch, mittels Vakuum oder durch Haltestifte.

Werden Halteplatten mit veränderbarer Magnetkraft verwendet, so kann auf das Einbringen von Distanzplättchen verzichtet werden. Dann wird die Rückseite 4b des Stanzblechs 1b mittels einer genau parallel zur Halteplatte 8a justierten Schleifscheibe auf das Sollmass h abgeschliffen.

Entsprechend der Fig.4 werden die Stanzkanten 7c eines Stanzblechs 1c mit jetzt negativer Toleranz bearbeitet. Analog zur oben beschriebenen Verfahrensweise werden die Stanzkanten 7d der Stege 6d, evtl. bei vorherigem Einbringen der Distanzplättchen 9b, auf einer gerichteten Halteplatte 8b geeignet fixiert (Fig. 5). In diesem Fall muss nun, um das geforderte Sollmass h zu erhalten, auf die Rückseite 4d des Stanzbleches 1d eine Schicht 11 aufgebracht werden. Denkbar ist das Aufbringen einer Schicht 11 von Kunststoff, der aus einer Flüssig-Zweikomponentenphase aushärtet. Bevorzugt ist dabei ein Auffüllen, das genau auf das Mass der Sollhöhe h erfolgt. Sollte jedoch ein Nachschleifen auf die Sollhöhe h nötig sein, so kann dies z.B. in oben beschriebener Weise grossflächig und einfach justierbar erfolgen.

Wie in Fig.6 dargestellt, sind anstelle von flächigen Halteplatten 8a, 8b auch Haltezylinder 12 möglich. Solche Haltezylinder, die vorzugsweise Magnetzylinder mit einstellbarer Magnetkraft sein können, gestatten das bogenförmige Aufspannen des Stanzbleches 1e, wobei das anschliessende Abtragen der Rückseite 4e auf einer Rundschleifmaschine erfolgt.

Ein auf diese Weise hergestelltes Stanzblech wird also eine höchstmögliche Genauigkeit besitzen, die einzig durch die Toleranzen der Maschinen bestimmt ist. Es kann sein, dass das Höhensollmass - bei einer garantierten Kantenbreite unter 0.005 mm - dann immer noch nicht die geforderten Toleranzen von 0.005 mm aufweist. Aber auch unter der Voraussetzung, dass das maschinell hergestellte Stanzblech den Toleranzforderungen für das Höhensollmass entspricht, kann es beim Ausstanzen der Etiketten zu einem unerwünscht ungleichmässigen Stanzvorgang kommen. Die Stanzbleche werden um einen Magnetzylinder gewickelt und auf die auf eine Trägerfolie aufgebrachte Etikettenschicht gepresst. Je nach der Anordnung der Stanzkanten auf der Zylinderoberfläche wird der Anpressdruck auf die Etikettenschicht unterschiedlich sein. So werden insbesondere die in Laufrichtung verlaufenden Stanzkanten einen geringeren Anpressdruck ausüben als die dazu senkrecht liegenden. Mittels einer Probestanzung oder auch bei Einstellung des Stanzwerkes auf der Druckmaschine kann geprüft werden, wo die Trägerfolie angeritzt wird, wo die Etikettenschicht nicht ganz durchschnitten wird und wo der Stanzvorgang korrekt vor sich geht. Das heisst aber, dass eine nachbearbeitende Gegenkorrektur sich als notwendig erweisen wird, die mit Hilfe des erfindungsgemässen Werkzeuges - von Hand - genau definiert möglich wird. Wie aus dem folgenden zu entnehmen ist, kann ein solches Werkzeug auch bei anders hergestellten Stanzblechen eingesetzt werden.

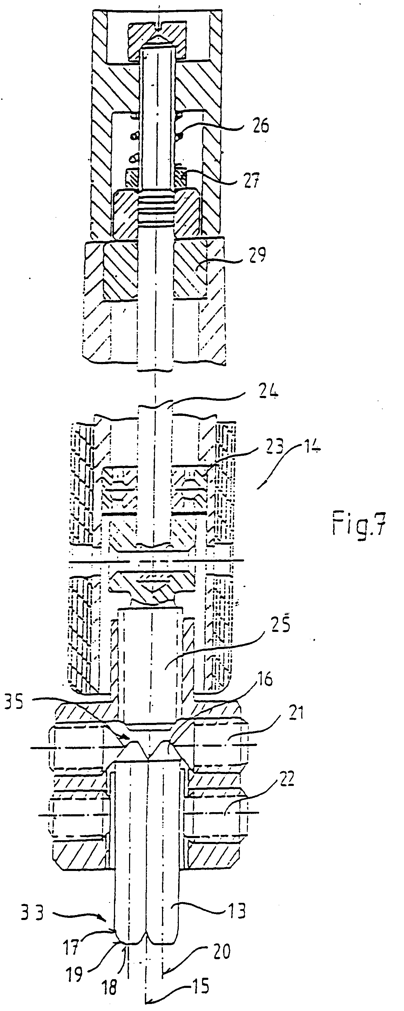

Fig.7 zeigt einen Längsschnitt durch das erfindungsgemässe Werkzeug. Zwei Hartstoff-Stifte 13 sind in einem Halter 14, vorzugsweise um ihre gemeinsame Längsachse 15 miteinander drehbar gelagert. Die beiden Hartstoff-Stifte 13, die einen quadratischen Querschnitt aufweisen, sind an ihrem oberen Ende durch abgestumpfte, regelmässige Pyramiden 16 begrenzt. Ihr unteres Ende wird durch, für das Einwirken auf die Stanzkantenflanken 30 bestimmte, gekrümmte Seitenflächen 17 und senkrecht zur Längsachse 15 liegende, vorzugsweise plane, Stirnflächen 18 gebildet, wobei zwischen Seitenflächen 17 und Stirnflächen 18, um des stetigen Übergangs willen, eine Rundkante 19 vorgesehen ist. Die Seitenflächen 17 sind vorzugsweise Rotationsflächen gekrümmter Kurven um die jeweiligen Längsachsen 20 der Hartstoff-Stifte 13, beispielsweise Kugelzonen- Oberflächen. Über die kegelförmig ausgebildeten Enden von Stiftschrauben 21 und die Seitenflächen der Pyramide 16 am oberen Ende der Hartstoff-Stifte 13 können die beiden Hartstoff-Stifte 13 unter dem Mikroskop so justiert werden, dass die Seitenflächen 17 der beiden Hartstoff-Stifte 13 genau spiegelsymmetrisch zur gemeinsamen Längsachse 15 liegen. Klemmschrauben 22 fixieren dann die beiden Hartstoff-Stifte 13 im Halter 14. Die drehbare Lagerung der Hartstoff-Stifte 13 geschieht in an sich bekannter Weise. Dazu weist der Halter 14 eine Welle 24 mit Wellenkopf 25, ein Radialkugellager 23, ev. eine Feder 26, ein Lager 29 und sichernde Muttern 27 auf.

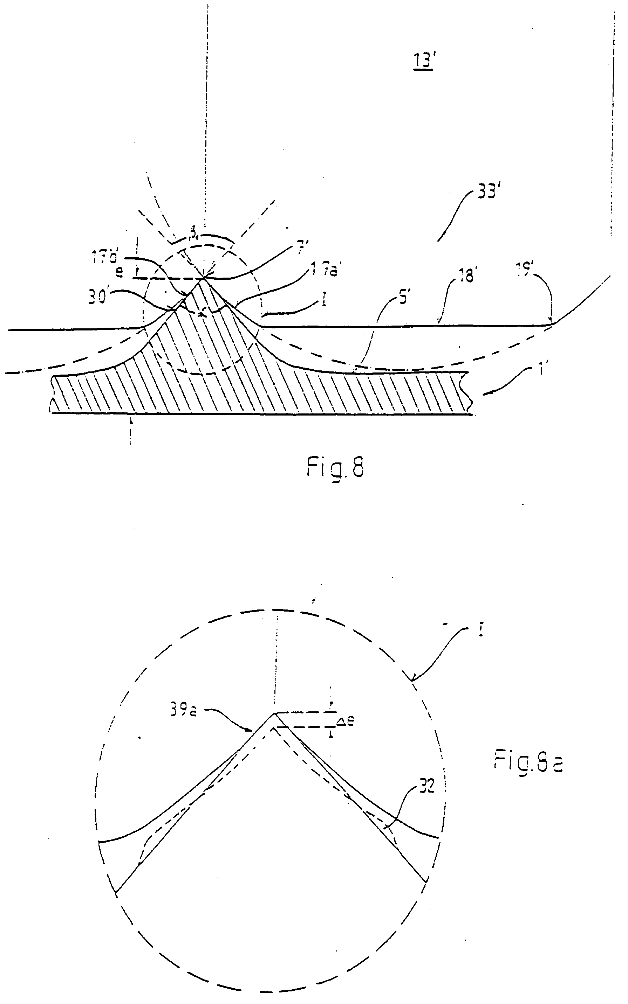

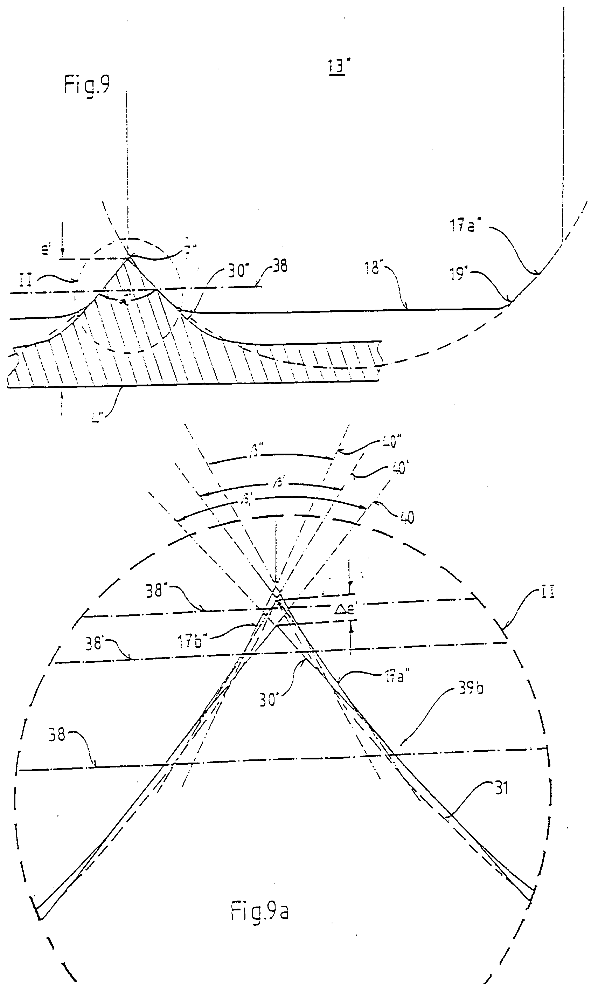

Aus den Fig.8 und 8a bzw. 9 und 9a ist zu erkennen, wie die Stanzkanten 7 mit Hilfe des Werkzeugs im Bereich ihrer Flanken 30 durch Andrücken (Fig.8) bzw. Aufdrücken (Fig.9) nachkorrigiert werden können. Auf die Flanken 30 der Stanzkanten 7 - der sie tragende Steg ist hier von den Flanken 30 allein gebildet - wird das Werkzeug aufgesetzt, von dem in Fig.8 und 9 nur das untere Ende zu sehen ist.

Fig.8 und 9 entsprechen einem Schnitt durch eine als erste Ebene bezeichnete Ebene, die parallel zu einer Ebene liegt, die durch die beiden Längsachsen 20 der beiden Hartstoff-Stifte 13 bestimmt ist (und im allgemeinen mit dieser zusammenfallen wird). Die Lage dieser Ebene ist durch die Kontaktstellen 39 bestimmt, an denen die Seitenflächen 17 und die Flanken 30 einander berühren. Der Winkel α, den die beiden Flanken 30 miteinander einschliessen, und der Winkel β1, den die Tangenten 40 an die Seitenflächen 17 in den Kontaktstellen 39 miteinander einschliessen, sind in beiden Fällen, also sowohl für das reduzierende (Fig.8) als auch für das erhöhende (Fig.9) Werkzeug praktisch gleich. Dort, wo die Seitenflächen 17 der beiden Hartstoff-Stifte 13 an deren unterem Ende 33 auseinanderzuklaffen beginnen, liegt das reduzierende Werkzeug mit seinen Kontaktstellen 39a unmittelbar an beiden Seiten der Stanzkante 7.

Für das erhöhende Werkzeug liegen diese Kontaktstellen 39b, an denen der Winkel β1' zweier Tangenten 40 an die Seitenflächen 17 gleich dem Flankenwinkel ist, etwas unterhalb des Punktes, an dem die Seitenflächen 17 auseinanderzuklaffen beginnen. Daraus ergibt sich das Erfordernis, dass in diesem Fall der Tangentenwinkel β',β'' etc. kleiner als der Winkel β1' an den Kontaktstellen 39b sein muss; die Tangentenwinkel β',β'' etc. sind dabei solche, die Tangenten 40' ,40'' etc. miteinander einschliessen, die an die Seitenflächen 17 in Punkte gelegt sind, an denen die Seitenflächen 17 im Schnitt zur zweiten Ebene 38 parallele, gegen das obere Ende 35 der HArtstoffStifte 13 verschobene Ebenen 38',38'' etc. durchdringen. Es ist also β1'>β'>β''>...(Fig.9a).

Im Gegensatz dazu sind die Kontaktstellen 39a des reduzierenden Werkzeugs, wie erwähnt und aus Fig.8a zu ersehen ist, im unmittelbar der Stanzkante 7' anliegenden Bereich; zur Schonung der Stanzkante 7' beim Andrücken wird also der Winkel β1 möglichst gleich dem Winkel α sein müssen. Eine Verletzung der Stanzkante 7' beim Andrücken ist ausgeschlossen, weil das Werkzeug aus zwei Teilen, nämlich den beiden Hartstoff-Stiften 13, besteht, deren beide End-Seitenflächen 17'an ihrem Schnittpunkt einen einwandfrei definierten Winkel, der vorzugsweise gleich α ist, aufweisen.

Fig.8 zeigt das mit seinen an den unteren Enden 33' der Hatstoff-Stifte 13' ausgebildeten Seitenflächen 17' an die Flanken 30' der Stanzkante 7' angelegte Werkzeug. Der Abstand e soll in diesem Fall reduziert werden, ohne dass die Kante 7' ihrer durch die maschinelle Bearbeitung entstandenen Schärfe verlustig geht. Die beiden Seitenflächen 17'a und 17'b der beiden Hartstoff-Stifte 13' schliessen dazu an ihrem Schnittpunkt einen Winkel β ein, der dem Winkel α, den die beiden Flanken 30' miteinander einschliessen, entspricht. Damit wird bei dem korrigierenden Drückvorgang, der der Kante 7' entlang vorgenommen wird, die Kante 7' schützend gefasst. Der Druck auf die Seitenflanken 30' in ihrem knapp an der Kante 7' liegenden Bereich bewirkt ein leichtes "Aufstauchen", wodurch Aufwölbungen 32 an den Flanken 30' entstehen und der Abstand e verkleinert wird. Fig.8a zeigt anhand des Details I aus Fig.8 die Aufwölbungen 32, der Abstand wurde um Δe reduziert. Es ist deutlich zu erkennen, dass die Stanzkante 7' bei diesem Korrekturvorgang nicht verändert wird und ihre Schärfe somit erhalten bleibt. Geringfügigste Korrekturen von 0.001 mm aufwärts sind damit möglich.

Die Seitenflächen 17' sind Oberflächen von Kugelzonen (der Umfang der Kugel ist strichpunktiert angedeutet), die am unteren Ende von den Stirnflächen 18' begrenzt sind. Dadurch wird beim Aufsetzen des Werkzeuges auf die Stanzkante 7' das untere Ende 33' des Hartstoff-Stiftes 13' nicht auf der Oberseite 5' des Stanzbleches 1' zum Aufliegen kommen und die Bewegung des Werkzeuges behindern. Eine Rundkante 19' zwischen Seitenfläche 17' und Stirnfläche 18' bewirkt einen stetigen Übergang zwischen den beiden Flächen, so dass keine störende Kante vorhanden ist, die bei unaufmerksamem Aufsetzen des Werkzeuges an die Stanzkante 7'zu unerwünschten Einkerbungen führen könnte.

In Fig.9 ist analog dazu die Erhöhung einer Stanzkante 7'' gezeigt, deren Abstand e' von der Rückseite 4'' des Stanzbleches 1'' zu klein ist. Das Werkzeug, das zwar im wesentlichen dem in der Fig. 8 dargestellten Werkzeug zum Andrücken entspricht, unterscheidet sich von diesem durch die Folge der Winkel β1', β', β'' etc., wie oben beschrieben. Daher werden beim drückenden Bewegen des Werkzeuges die Flanken 30'' der Stanzkante 7'' entlang diese gegeneinander gedrückt und die Stanzkante 7'' somit gehoben. Wie aus Fig.9a, die das Detail II der Fig.9 zeigt, zu erkennen ist, werden bei diesem Korrekturvorgang Vertiefungen 31 an den Flanken 30'' erzeugt; die Stanzkante 7'' wird in den zwischen den Seitenflächen 17'' des Werkzeugs, der Stanzkante 7' und den Flanken 30'' liegenden, freien Raum gehoben; somit eine Erhöhung von Δe' des Abstands e' erreicht.

Der beispielsweise quadratische Querschnitt der Hartstoff-Stifte und die Ausgestaltung ihrer oberen Enden in Form einer Pyramide erlaubt nach längerem Gebrauch des Werkzeugs, nach Lösen der Klemmschrauben, die Stifte um jeweils 90° zu drehen, neu zu justieren und wieder, wie oben beschrieben, zu gebrauchen. Natürlich können in gleicher Weise alle möglichen rotationssymmetrischen Querschnitte, einem gleichzeitigen Dreieck entsprechend, sechs- oder achteckig, oder auch rund, und entsprechend ausgeformte obere Enden für die Hartstoff-Stifte vorgesehen werden, um Neujustierungen vornehmen zu können.

Die Ausformung von Stirnfläche 18'' und Rundkante 19'' entspricht dem in Fig. 8 beschriebenen Werkzeug.

Das Werkzeug, sei es das reduzierende oder das erhöhende, kann selbstverständlich auch in beispielsweise computergesteuerten CNC-Maschinen zum Einsatz gelangen.

## Patentansprüche

1. Stanzblech (1) aus Stahlblech, welches mindestens einen von der Vorderseite (5) abragenden, jeweils eine Stanzkante (7) tragenden Steg (6) besitzt, wobei - über die Längserstreckung des Steges - der Normal-Abstand der Stanzkante (7) von der Rückseite (4) des Stanzblechs (1) um ein Sollmass (h) mit einer Toleranz von höchstens 0.04 mm variiert, dadurch gekennzeichnet, dass an beiden Flanken (30) der Stanzkante (7), im wesentlichen unmittelbar an dieser, je eine durch Drücken erzielte Vertiefung (31) oder Aufwölbung (32) angeordnet ist.

2. Stanzblech(1) nach Anspruch 1, dadurch gekennzeichnet, dass der Normal-Abstand der Stanzkante (7) von der Rückseite (4) des Stanzbleches (1) eine Toleranz von höchstens 0.02, vorzugsweise weniger als 0.005 mm aufweist und die Stanzkanten (7) höchstens 0.01, vorzugsweise höchstens 0.005 mm - insbesondere höchstens 0.001 mm - breit sind.

3. Stanzblech (1) nach Anspruch 1 oder 2, dadurch gekennzeichnet, dass auf seiner Rückseite (4) in mindestens einem Bereich der Stege (6) Material abgetragen oder aufgefüllt ist.

4. Stanzblech (1) nach Anspruch 3, auf dessen Rückseite (4) Material abgetragen ist, dadurch gekennzeichnet, dass das Gefüge des Material des Stahlblechs in mindestens einem Bereich der Stege (6) an der Rückseite (4) und/oder an der Oberfläche im Bereich der Flanken - im wesentlichen unmittelbar an der Stanzkante - im Querschnittsschliff gegenüber den angrenzenden Bereichen verändert ist.

5. Stanzblech (1) nach Anspruch 3 oder 4, dadurch gekennzeichnet, dass es in mindestens einem Bereich der Rückseite (4) mit mindestens einer Schicht (11) von unterschiedlicher Dicke (d) belegt ist.

6. Verfahren zur Herstellung eines Stanzbleches (1) nach einem der Ansprüche 1 bis 5, wobei auf einem Ausgangsblech wenigstens ein eine Stanzkante (7) tragender Steg (6) erzeugt und die Stanzkante (7) manuell oder maschinell bearbeitet wird, dadurch gekennzeichnet, dass ein nicht spanabhebendes Werkzeug gleichzeitig auf beide Flanken (30) der Stanzkante (7) drückend - im wesentlichen unmittelbar im Bereich der Stanzkante (7) - an den Flanken (30) entlang geführt wird.

7. Verfahren zur Herstellung eines Stanzbleches (1) nach Anspruch 6, dadurch gekennzeichnet, dass vor der Bearbeitung mit dem nicht-spanabhebenden Werkzeug der Normal-Abstand auf eine Positive Toleranz eingestellt und anschliessend das Übermass auf der Rückseite (4) durch Abtragen oder Spanen mit geometrisch unbestimmter Schneidenform abgetragen wird.

8. Verfahren nach Anspruch 7, dadurch gekennzeichnet, dass der Normal-Abstand durch Materialauftrag auf der Rückseite (4) des Stanzbleches (1) auf eine positive Toleranz eingestellt wird.

9. Verfahren zur Herstellung eines Stanzbleches (1) nach Anspruch 6, dadurch gekennzeichnet, dass vor der Bearbeitung mit dem nicht-spanabhebenden Werkzeug der Normal-Abstand auf eine negative Toleranz eingestellt und anschliessend das Untermass durch Materialauftrag auf der Rückseite (4) aufgefüllt wird.

10. Verfahren nach einem der Ansprüche 7 bis 9, dadurch gekennzeichnet, dass das Stanzblech (1) auf einer Halteplatte (8) - vorzugsweise durch Magnetkraft, Vakuum oder Haltestifte, insbesondere mit regulierbarer Haltekraft - fixiert wird, wobei die Stanzkante (7) gegen die Halteplatte (8) gerichtet sind und vorzugsweise beidseitig des Steges (6) Distanzplättchen (9) eingebracht werden.

11. Werkzeug zur Durchführung des Verfahrens nach einem der Ansprüche 6 bis 10, dadurch gekennzeichnet, dass zwei in einem Halter (14) - vorzugsweise lösbar - aneinander fixierte, insbesondere zueinander parallele Hartstoff-Stifte (13) an ihren unteren Enden (33) Seitenflächen (17) aufweisen, wobei - in einem ersten Schnitt durch die genannten Kontaktstellen, der parallel zur durch die beiden Längsachsen (20) der Hartstoff-Stifte (13) bestimmten ersten Ebene liegt - die beiden Seitenflächen (17) an eben diesen Kontaktstellen einen Winkel (β1) miteinander einschliessen, der mindestens gleich - vorzugsweise identisch - mit dem von den beiden Flanken (30) eingeschlossenen Winkel (α) ist, in weiteren, zu diesem ersten Schnitt parallelen Schnitten jedoch, in wenigstens einer Richtung von den Kontaktstellen weg, an Schnittpunkten, die durch eine zur Rückseite (4) des Stanzbleches (1) parallele und durch die Kontaktstellen gehende zweite Ebene (38) festgelegt sind, jeweils Winkel (β2, β3,...) miteinander einschliessen, die stetig zunehmen, so dass β1 < β2 < β3 < ... ist.

12. Werkzeug nach Anspruch 11, dadurch gekennzeichnet, dass die Seitenflächen (17) gleiche, vorzugsweise um die Längsachse (20) jedes Hartstoff-Stiftes (13) symmetrische Flächen zweiter Ordnung, vorzugsweise Kugelkalotten mit einem Radius von 0,5 bis 1,5 mm, insbesondere von etwa 1 mm, sind.

13. Werkzeug nach Anspruch 11 oder 12, dadurch gekennzeichnet, dass die Seitenflächen (17) über Rundkanten (19), die vorzugsweise einen Krümmungsradius von 0,001 bis 0,1 mm, insbesondere von etwa 0,03 mm aufweisen, in Stirnflächen (18) mit geringer Krümmung, die vorzugsweise gleich Null ist, stetig übergehen (Fig.8, Fig. 9).

14. Werkzeug nach einem der Ansprüche 11 bis 13, zur Reduktion des Normal-Abstandes (e) der Stanzkante (7) von der Rückseite (4) des Stanzbleches (1), dadurch gekennzeichnet, dass der Winkel (β1) um 5 bis 50%, insbesondere um 10 bis 20%, grösser als der Winkel (α) ist.

15. Werkzeug nach einem der Ansprüche 11 bis 13, zur Vergrösserung des Abstandes (e), dadurch gekennzeichnet, dass der Winkel (α) gleich dem Winkel (β1) und der Winkel (β',β'',...) kleiner, vorzugsweise um 2 bis 50 %, insbesondere um 5 bis 20 %, kleiner als der Winkel (α) ist, wobei der Winkel (β',β'',...) von den Tangenten (40) an die Seitenflächen (17) in solchen Punkten gebildet wird, an denen die Seitenflächen (17) - im ersten Schnitt gesehen - von beliebigen, zur zweiten Ebene (38) parallelen Ebenen, die gegen das obere Ende (35) der Hartstoff-Stifte (13) verschoben sind, durchdrungen werden (Fig.9a).

16. Werkzeug nach einem der Ansprüche 11 bis 15, dadurch gekennzeichnet, dass die Hartstoff-Stifte (13) in dem Halter (14) um ihre gemeinsame Längsachse (15) miteinander rotierbar gelagert sind.

17. Werkzeug nach einem der Ansprüche 11 bis 16, dadurch gekennzeichnet, dass die - vorzugsweise einen quadratischen Querschnitt aufweisenden - HArtstoff-Stifte (13) an ihrem oberen Ende (35) abgeschrägt sind beziehungsweise vorzugsweise einer - gegebenenfalls abgestumpften - Pyramide (16) entsprechen, und zum Eingriff mit an den Enden von seitlich durch den Halter (14) geführten Stiftschrauben (21) angeordneten Kegelflächen ausgebildet sind.

18. Werkzeug nach einem der Ansprüche 11 bis 17, dadurch gekennzeichnet, dass Klemmschrauben (22) zur lösbaren Fixierung der beiden Hartstoff-Stifte (13) in ihrem Halter (14) vorgesehen sind.
